(19) Europäisches Patentamt / European Patent Office / Office européen des brevets

(11) **EP 4 191 715 A1**

(12) **EUROPÄISCHE PATENTANMELDUNG**

(43) Veröffentlichungstag:
**07.06.2023 Patentblatt 2023/23**

(21) Anmeldenummer: **21211613.1**

(22) Anmeldetag: **01.12.2021**

(51) Internationale Patentklassifikation (IPC):
**H01M 8/021** (2016.01)   **H01M 8/0213** (2016.01)
**H01M 8/0228** (2016.01)

(52) Gemeinsame Patentklassifikation (CPC):
**H01M 8/021; H01M 8/0213; H01M 8/0228**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Federal-Mogul Burscheid GmbH**
**51399 Burscheid (DE)**

(72) Erfinder: **Fukarek, Wolfgang**
**51399 Burscheid (DE)**

(74) Vertreter: **Kailuweit & Uhlemann Patentanwälte**
**Partnerschaft mbB**
**Bamberger Straße 49**
**01187 Dresden (DE)**

(54) **BIPOLARPLATTE FÜR BRENNSTOFFZELLE**

(57) Gegenstand der vorliegenden Erfindung ist eine Bipolarplatte für Brennstoffzellen sowie ein Verfahren zu deren Herstellung.

Die Bipolarplatte weist auf einem Stahl-Substrat eine anisotrope nanokristalline Kohlenstoffschicht auf, die über eine karbidische Zwischenschicht an das Substrat angebunden ist. Die Kohlenstoffatome der anisotropen nanokristallinen Kohlenstoffschicht sind überwiegend sp2-koordiniert in graphitischen Nanokristalliten derart angeordnet, dass die c-Achsen der graphitischen Nanokristallite hochgradig parallel zur Oberfläche des Substrates orientiert sind.

Das Verfahren zur Herstellung der Bipolarplatte sieht vor, das Stahlsubstrat vor dem Aufbringen der Folgeschichten zu polieren und anschließend die anisotrope nanokristalline Kohlenstoffschicht mittels eines PVD-Verfahrens auf der Substratoberfläche zu deponieren. Abschließend wird eine während des PVD-Vorganges entstehende amorphe Kohlenstoffdeckschicht von der anisotropen nanokristallinen Kohlenstoffschicht entfernt. Dabei wird die Oberfläche der Kohlenstoffschicht gleichzeitig hydrophilisiert und/oder funktionalisiert.

Fig. 3

**Beschreibung**

Gegenstand der vorliegenden Erfindung ist eine Bipolarplatte für Brennstoffzellen sowie ein Verfahren zur Herstellung einer solchen Bipolarplatte.

Der Aufschwung alternativer Antriebe in den vergangenen Jahren hat zu einer beschleunigten Entwicklung von Brennstoffzellen als Energiequellen für diese Antriebe geführt.

Zentrale Elemente in Brennstoffzellen sind Bipolarplatten. Diese fungieren als Anode einer Zelle und gleichzeitig Kathode einer benachbarten Zelle in den Zellstapeln einer Brennstoffzellenanordnung.

Die Bipolarplatten sind dabei intensiven elektro-chemischen Beanspruchungen (Korrosion) ausgesetzt. Gleichzeitig sollen die Bipolarplatten einen möglichst geringen Widerstand (Kontakt- und Durchgangswiderstand) aufweisen, um elektrische Zellverluste zu minimieren.

Als Material für eine Bipolarplatte wird in vielen Fällen eine Graphitplatte oder Titanfolie verwendet. Ein Edelstahlblech bzw. eine Edelstahlfolie wären platzsparender und kostengünstiger. Die Korrosionsbeständigkeit und der interne Kontaktwiderstand (ICR) von Edelstählen sind jedoch nicht ausreichend. Zur Verringerung der Korrosion wurden verschiedene Beschichtungen erprobt. Diese Beschichtungen sollen neben der Erhöhung der Korrosionsbeständigkeit den elektrischen Kontaktwiderstand zur angrenzenden Gasdiffusionsschicht möglichst minimieren.

Neben verschiedenen metallischen Beschichtungen haben sich Kohlenstoffschichten als besonders geeignet erwiesen.

In Abhängigkeit von der Ausbildung der Elektronenorbitale in der chemischen Bindung werden die Kohlenstoffstrukturen in drei Formen eingeteilt: Kohlenstoff mit einem sp-Hybridorbital, Kohlenstoff mit einem sp2-Hybridorbital und Kohlenstoff mit einem sp3 Hybridorbital. Diamant, der nur aus nur aus Kohlenstoff mit sp3-Hybridorbitalen besteht, weist einen hohen elektrischen Widerstand aufgrund der Fixierung der Elektronen in den kovalenten Bindungen zwischen den Kohlenstoffatomen auf. Demgegenüber besteht Graphit aus sp2-gebundenen Kohlenstoffatomen. Graphit besitzt eine Schichtstruktur. Während innerhalb der Schichten starke kovalente Bindungen zwischen den Kohlenstoffatomen bestehen, wirken zwischen den Ebenen lediglich die sehr viel schwächeren Van-der-Waals-Kräfte. Die Leitfähigkeit innerhalb der Schichten ist sehr viel höher als zwischen den Schichten.

So schlägt die EP 2 811 049 B1 vor, einen amorphen Kohlenstofffilm, der neben Kohlenstoff als Hauptbestandteil, nicht mehr als 30 Atom-% Wasserstoff, nicht mehr als 20 Atom-% Stickstoff und nicht mehr als 3 Atom-% Sauerstoff enthält, als Beschichtung für eine Bipolarplatte für Brennstoffzellen zu nutzen. Innerhalb des Kohlenstoffanteils soll die Menge des Kohlenstoffs mit einem sp2-Hybridorbital nicht weniger als 70 at. % und weniger als 100 at. % betragen. Stickstoff und Sauerstoff sollen in Oberflächennähe der Kohlenstoffschicht konzentriert sein.

Durch den hohen Anteil an sp2-hybridisierten Kohlenstoffkristallen soll eine hohe Leitfähigkeit erzielt werden. Der verbleibende Anteil an sp3-gebundenem Kohlenstoff soll hingegen die Festigkeit der Oberflächenbeschichtung verbessern.

Während die kristallinen Bereiche natürlichen Graphits eine ungeordnete Ausrichtung der kristallinen Bereiche zueinander aufweisen oder, wie in pyrolytischen Graphiten (HOPG), hochgradig orientiert sein können, können technisch hergestellte Graphitschichten gerichtet, vorzugsweise parallel zueinander ausgerichtet sein.

Die CN102959779A verwendet Graphitschichten, die parallel zur Oberfläche eines Titansubstrates ausgerichtet sind als Brennstoffzellen-Separatorplatte. Zur Verbesserung der Haftung der Graphitschichten auf der Oberfläche des Separators wird eine Titankarbidschicht eingesetzt, die ebenfalls parallel zu den Graphitschichten ausgerichtet ist. Zur Herstellung der Graphitschichten wird das Auswalzen von ungeordnetem Graphit auf der Titanoberfläche vorgeschlagen. Die erzielten Kontaktwiderstände liegen im Bereich zwischen 2,8 mOhm*cm$^2$ und 8,9 mOhm*cm$^2$ (Tabelle 1 der CN102959779A).

Die Eigenschaft der besonders guten elektrischen Leitfähigkeit in Schichtrichtung in Graphit wurde in der der US 8,993,197 B2 sowie in der EP 3 583 645 B1 aufgegriffen.

In diesen Druckschriften wird vorgeschlagen, die Graphitschichten senkrecht zur Oberfläche der Separatorplatte (Substrat) auszurichten. Diese Vorgehensweise soll neben dem stark reduzierten Kontaktwiderstand eine verbesserte Oberflächenfestigkeit hervorbringen, da die Graphitschichten nicht mehr parallel zur Oberfläche verschiebbar und somit leicht abzutragen wären. Darüber hinaus ist die Bindungsenergie der Kohlenstoffatome in der sp2-Konfiguration besonders hoch, so dass einem mechanischen Abtrag der Kohlenstoffatome von der Oberfläche entgegengewirkt wird.

Die US 8,993,197 B2 (auch als DE 11 2010 004 990 B4) geht auf dieselben Anmelder zurück, wie die EP 2 811 049 B1. Gegenüber dieser ist hier die Orientierung der sp2-Kohlenstoffschichten senkrecht zur Oberfläche explizit angegeben.

Die EP 3 583 645 B1 offenbart ein Verfahren zur Herstellung einer Bipolarplatte für Brennstoffzellen. Auf einem metallischen Substrat aus Edelstahl wird eine Randschicht durch ein Nitrier-, ein Carburier- oder ein Carbonitrierverfahren ausgebildet und/oder die jeweilige Oberfläche des Substrats wird mit einer graphitischen Schicht, beschichtet. Das Substrat wird anschließend durch Werkstoffabtrag oder ein Prägeverfahren strukturiert Die graphitische Schicht sollte nach Absatz [0029] bevorzugt vollständig geschlossen mit mehreren übereinander bzw. bevorzugt nebeneinander insbesondere senkrecht zur BiP-Oberfläche, angeordneten Atomlagen bzw. Strukturen gebildet sein. In Absatz [0048] wird das Aufrauen der Oberfläche des Edelstahlsubstrats als besonders vorteilhaft bezeichnet. Wie die Ausbildung der senkrecht zur Oberfläche ausgerichteten Schichten erfolgen soll, wird lediglich mit sehr breit gefassten Parameterbereichen angegeben.

Es stellt sich somit weiterhin die Aufgabe, eine preisgünstige, korrosionsbeständige Bipolarplatte für Brennstoffzellen anzugeben, die einen geringen Kontaktwiderstand ermöglicht. Darüber hinaus soll ein Verfahren zur Herstellung einer solchen Bipolarplatte offenbart werden.

Erfindungsgemäß wird die Aufgabe mit einer Bipolarplatte für Brennstoffzellen nach Anspruch 1 gelöst. Ein Verfahren zur Herstellung einer derartigen Bipolarplatte ist im nebengeordneten Verfahrensanspruch offenbart. Vorteilhafte Ausgestaltungen sind den rückbezogenen Unteransprüchen zu entnehmen.

Unter einem graphitischen Nanokristallit werden im Folgenden benachbarte, aneinander mit Van-der-Waals-Kräften gebundene, gleichorientierte Schichten aus sp2-hybridisiertem Kohlenstoff verstanden. Die Nanokristallite bestehen aus mehreren parallelen Lagen graphitisch (sp2-) gebundener Kohlenstoffatome. Die Nanokristallite weisen Abmessungen innerhalb der graphitischen Ebenen von 3 nm bis 300 nm auf. Senkrecht zu den sp2-gebundenen Schichten sind mindestens 3 parallele Atomlagen angeordnet. Mehrere nebeneinander gelagerte graphitische Nanokristallite können gleiche, aber auch unterschiedliche Ebenenausrichtungen aufweisen. In der vorliegenden Anwendung stehen die Ebenen senkrecht bzw. annähernd senkrecht (die Winkelabweichung liegt im Bereich von 45° bis 0°, bevorzugt, 30° bis 0° und besonders bevorzugt von 15° bis 0° von der Senkrechten) auf der Oberfläche des Substrates. Die Normalenvektoren auf die Ebenen verschiedener benachbarter Nanokristallite (c-Achsen) können jedoch in verschiedene Richtungen weisen.

Die erfindungsgemäße Bipolarplatte für eine Brennstoffzelle weist ein beschichtetes Substrat auf. Als Substrat kommt ein Stahlblech oder eine Stahlfolie (vorzugsweise Edelstahl) zum Einsatz. Auf dem Substrat ist auf mindestens einer Seite eine anisotrope nanokristalline Kohlenstoffschicht (eine Schicht, die zum mehr als 50%, bevorzugt zu mehr als 70% und besonders bevorzugt zu mehr als 90°% aus graphitischen Nanokristalliten besteht) angeordnet.

Überraschend hat es sich als besonders vorteilhaft erwiesen, die Oberfläche des Substrates vor dem Aufbringen weiterer Schichten zu polieren. Das Substrat ist daher bis zu einer Restrauigkeit Ra < 100 nm, möglichst < 70nm, bevorzugt < 50 nm und besonders bevorzugt < 25 nm poliert.

Die Kohlenstoffatome sind überwiegend als sp2-koordinierte graphitische Nanokristallite angeordnet. Der Massenanteil der sp2-koordinierten graphitischen Nanokristalliten an der anisotropen nanokristallinen Kohlenstoffschicht beträgt mindestens 70 %, bevorzugt, mehr als 85 % und besonders bevorzugt, mehr als 90 % und ist stets kleiner als 100%). Die c-Achsen der graphitischen Nanokristallite sind hochgradig (komplementär zu Winkelabweichungen der graphitischen Schichten der Nanokristallite von der Senkrechten) parallel zur Oberfläche des Substrates orientiert. Dies bedingt, dass die graphitischen Schichten der Nanokristallite im Wesentlichen senkrecht bzw. mit geringen Abweichungen zur Senkrechten zur Oberfläche angeordnet sind. Die Winkelabweichung der graphitischen Nanokristalle (genauer, der sp2-gebundenen Kohlenstoffebenen) von der Senkrechten auf die Substratoberfläche liegt im Bereich von 45° bis 0°, bevorzugt, 30° bis 0° und besonders bevorzugt von 15° bis 0°.

Die graphitischen Nanokristallite sind über eine amorphe karbidische Zwischenschicht an das Substratmaterial gebunden. Die amorphe karbidische Zwischenschicht ist somit zwischen dem Substrat und der anisotropen nanokristallinen Kohlenstoffschicht angeordnet. Die amorphe karbidische Zwischenschicht ist aus Kohlenstoffatomen und Atomen des Substrates gebildet. Alternativ ist die amorphe karbidische Zwischenschicht aus Kohlenstoffatomen und den Atomen einer metallischen Zwischenschicht gebildet, wobei die metalische Zwischenschicht zwischen Substrat und karbidischer Zwischenschicht angeordnet ist

Weiterhin bilden die graphitischen Nanokristallite eine karbidische Bindung zum Metall des Substrats oder zu der metallischen Zwischenschicht aus und reichen bis zur Oberfläche der Beschichtung der Bipolarplatte. Auf diese Weise bilden die graphitischen Nanokristallite einen durchgehenden elektrischen Leiter.

Die vom Substrat abgewandte Seite der anisotropen nanokristallinen Kohlenstoffschicht ist hydrophilisiert und/oder funktionalisiert. Eine im Schichtabscheideprozess entstandene amorphe Kohlenstoff-Oberflächenschicht wurde entfernt. Dies erfolgt bevorzugt mittels eines Ätzprozesses mit einem niederenergetischen Plasma, vorzugsweise eins Sauerstoffplasmas. Die Entfernung der amorphen Kohlenstoff-Oberflächenschicht kann jedoch auch mit einem Wasserstoff-, Kohlenwasserstoff- oder Halogen-Plasma bzw. Gemisch mit einem Inertgas wie beispielsweise Ar erfolgen.

Das Edelstahlblech bzw. die Edelstahlfolie, die als Substrat fungiert, besteht bevorzugt aus einem Edelstahl mit hohem Chrom-Anteil. Durch die Ausbildung von Chromoxid an der Substratoberfläche wird bereits eine vorteilhafte Korrosionsbeständigkeit erreicht. Die natürliche Chromoxidschicht behindert jedoch das Aufbringen der anisotropen nanokristallinen Kohlenstoffschicht. Die Chromoxidschicht ist daher vor dem Beschichten des Substrats zu entfernen. Die Materialdicke des Substrates liegt im Bereich von 50 μm bis 200 μm. Geeignete Edelstähle sind bspw: 1.4404, 1.4303 und 1.4301.

Die Substratoberfläche wurde vor dem Aufbringen der ersten Beschichtung bis zu einer Restrauigkeit Ra < 100 nm, bevorzugt < 70nm, besonders bevorzugt< 50 nm und ganz besonders bevorzugt < 25 nm poliert. Die Restrauigkeit wird dabei taktil oder optisch z.B. mit einem Laser-Mikroskop bestimmt.

Bevorzugt erfolgt die Messung der Restrauigkeit taktil nach den folgenden Normen:

- DIN EN ISO 3274:1998-04, Geometrische Produktspezifikationen (GPS)-Oberflächenbeschaffenheit: Tastschnittverfahren - Nenneigenschaften von Tastschnittgeräten (ISO 3274:1996); Deutsche Fassung EN ISO 3274:1997
- DIN EN ISO 4288:1998-04, Geometrische Produktspezifikation (GPS)-Oberflächenbeschaffenheit: Tastschnittverfahren- Regeln und Verfahren für die Beurteilung der Oberflächenbeschaffenheit (ISO 4288:1996); Deutsche Fassung EN ISO 4288:1997

Als Polierverfahren können mechanische Verfahren, bspw. mittels Polierbänder und -pasten, oder Plasma-Verfahren wie die in Belkin et. al., "Mechanism and technological opportunity of plasma electrolytic polishing of metals and alloys surfaces" beschriebene Verfahrensweise eingesetzt werden.

Beim mechanischen Polieren wird verfahrensbedingt die Chromoxidschicht auf dem Substrat mit entfernt. Beim Plasmapolieren bildet sich die Chromoxidschicht neu und muss mittels Sputterns entfernt werden.

Die amorphe karbidische Zwischenschicht ist in einer ersten Ausführungsform ein Gemisch aus Kohlenstoff und dem Material des Substrates.

In einer zweiten Ausführungsform ist die amorphe karbidische Zwischenschicht ein Gemisch aus Kohlenstoff und dem Material der optionalen metallischen Zwischenschicht.

In beiden Fällen wird die amorphe karbidische Zwischenschicht durch Ionenimplantation bzw. Subplantation von Kohlenstoffatomen in bzw. unter die Oberfläche des Substrats bzw. der metallischen Zwischenschicht ausgebildet. Dabei werden Kohlenstoffatome in das metallische Gitter eingebaut und bilden einen vorteilhaften Übergangsbereich zur darüber liegenden anisotropen nanokristallinen Kohlenstoffschicht aus. Durch die karbidische Zwischenschicht wird die Haftung der anisotropen nanokristallinen Kohlenstoffschicht auf der Substratoberfläche verbessert. Darüber hinaus wird der elektrische Übergangswiderstand vom Substrat zur anisotropen nanokristallinen Kohlenstoffschicht reduziert. Es werden innere Kontaktwiderstände (ICR) zwischen Gasdiffusionsschicht (GDL) und Kohlenstoffschicht < 0,2 mOhm*$cm^2$ erreicht. Die Dicke der amorphen karbidischen Zwischenschicht liegt im Bereich von 2 nm bis 4 nm.

Die optionale metallische Zwischenschicht besteht bevorzugt aus Chrom oder Titan. Die Materialdicke der metallischen Zwischenschicht liegt bevorzugt im Bereich von 2 nm bis 300 nm.

Optional ist die anisotrope nanokristalline Kohlenstoffschicht dotiert. Als Dotanten werden bevorzugt Bor mit einer Dotierungsdichte von < 5 at% oder Stickstoff mit einer Dotierungsdichte von < 5 at% genutzt. Dieses Vorgehen verbessert die Leitfähigkeit der anisotropen nanokristallinen Kohlenstoffschicht weiter, insbesondere, wenn die Dotieratome bevorzugt in den amorphen Gebieten oder an den Rändern der graphitischen Nanokristallite eingebaut werden.

Optional kann die vom Substrat abgewandte Seite der anisotropen nanokristallinen Kohlenstoffschicht hydrophilisiert werden. Die Hydrophilisierung erfolgt zur Optimierung des Wasserhaushaltes der Brennstoffzellen und kann bevorzugt durch die Anlagerung von Sauerstoff oder Stickstoff an der Oberfläche der anisotropen nanokristallinen Kohlenstoffschicht realisiert sein. Die Funktionalisierung der Oberfläche insbesondere mit Sauerstoff kann ebenfalls genutzt werden, um eine starke mechanische Anbindung von Polymeren über Sauerstoffbrückenbindung zu realisieren. Dies ist insbesondere für gedruckte oder gespritzte Dichtungen, die beim späteren Zusammenbau der Brennstoffzelle zum Einsatz kommen, vorteilhaft.

Weiterhin kann optional alternativ oder zusätzlich zu einer Hdrophilisierung eine Funktionalisierung der vom Substrat abgewandten Seite der anisotropen nanokristallinen Kohlenstoffschicht erfolgen. Dazu kann bspw. Fluor auf der vom Substrat abgewandten Seite der anisotropen nanokristallinen Kohlenstoffschicht angelagert sein.

Das Substrat ist einseitig oder beidseitig beschichtet. Darüber hinaus ist das Substrat vollflächig oder optional nur bereichsweise (bspw. abseits von Kontaktzonen von Halterungen oder ähnlichem) erfindungsgemäß beschichtet.

Das erfindungsgemäße Verfahren zur Herstellung einer beschichteten Bipolarplatte für Brennstoffzellen, weist mindestens die folgenden Schritte auf:

a. Bereitstellen eines Stahlblechs oder eines Stahlfolie als Substrat

b. Polieren des Substrats zu einer Restrauigkeit < 100 nm, bevorzugt < 50 nm und ganz besonders bevorzugt < 25 nm,

c. Entfernen von Adsorbaten und/oder der natürlichen Oxidschicht von der Oberfläche des Substrates,

d. Deponieren von Kohlenstoffatomen mit Energien im Bereich von 500 eV bis 1000 eV und bei Temperaturen des Substrates zwischen 150°C und 300°C auf dem Substrat und Ausbilden einer karbidischen Zwischenschicht sowie nachfolgend einer Schicht von überwiegend sp2- koordinierten graphitischen Nanokristalliten zu einer anisotropen nanokristallinen Kohlenstoffschicht bis zu einer Schichtdicke im Bereich von 5 nm bis 100 nm mit einem PVD-Verfahren,

e. Abtragen einer amorphen Kohlenstoffdeckschicht von der Oberfläche der anisotropen nanokristallinen Kohlenstoffschicht, die sich während des PVD-Prozesses in Schritt d. ausgebildet hat, mit einem niederenergetischen ionenassistierten Prozess, der die sp2-gebundenen Nanokristallite nicht zerstört. sowie gleichzeitiges Hydrophilisieren und/oder Funktionalisieren der Oberfläche der Kohlenstoffschicht.

Das Stahlblech bzw. die Stahlfolie weisen zum Zeitpunkt der Bereitstellung eine marktübliche Rauheit von Ra < 200 nm, bevorzugt ca. 100 nm auf.

Optional erfolgt vor dem Deponieren der Kohlenstoffatome das Aufbringen einer metallischen Zwischenschicht (Haftvermittler- und/oder Korrosionsschutzschicht), die beispielsweise aus Cr oder Ti ausgeführt ist, optional jedoch auch als Multilage mit leitfähigen Nitriden wie beispielsweise TiN hergestellt sein kann. Dieser Schritt erfolgt nach dem optionalen Entfernen von Adsorbaten und Oxidschichten von der Oberfläche des Substrates. Das Entfernen von Adsorbaten und Oxidschichten erfolgt vorzugsweise durch Zerstäuben mit Inertgas-Ionen wie beispielsweise Ar-Ionen oder Metallionen wie beispielsweise Ti-Ionen. Zum Aufbringen der metallischen Zwischenschicht wird ebenfalls ein PVD-Verfahren genutzt. Die metallische Zwischenschicht weist eine Materialstärke von 2 nm bis 300 nm auf. Bei polierten Substraten beträgt die Zwischenschicht bevorzugt 2 nm bis 100 nm, besonders bevorzugt, 2 nm bis 20 nm. Diese Zwischenschicht dient der Verbesserung der Korrosionsfestigkeit der Substratoberfläche und als Haftvermittler.

Das Polieren erfolgt bevorzugt mit einem mechanischen Verfahren wie Bandpolieren. Bevorzugt wird das in der DE 10 207 632 B4 angegebene Verfahren angewandt. Alternativ wird Plasmapolieren angewandt. Dabei kommt vorzugsweise die in Belkin et. al., "Mechanism and technological opportunity of plasma electrolytic polishing of metals and alloys surfaces" beschriebene Vorgehensweise zur Anwendung. Die Bestimmung der Restrauigkeit erfolgt bevorzugt taktil oder mit einem Lasermikroskop.

Durch das Polieren wird eine Reduktion von Kristalldefekten bzw. Korngrenzen an der Oberfläche des Substrates erreicht. Dies vermindert vorteilhaft die Angriffspunkte für eine Korrosion. Die Oberfläche des Substrates bildet nach dem Plasmapolieren eine passivierende Oxidhaut aus. Die Passivierung der Oberfläche erfolgt bei durch Bildung von Chromoxid. Aus diesem Grund passivieren Stähle mit höherem Chromanteil besser. Für die vorliegende Anwendung ist jedoch das Chromoxid vor der Beschichtung zu entfernen. Dies erfolgt mit bekannten Verfahren aus dem Stand der Technik, bspw. Sputtern.

Das Aufbringen der anisotropen nanokristallinen Kohlenstoffschicht erfolgt bevorzugt in einem PVD-Verfahren (Physical Vapour Deposition - physikalische Gasphasenabscheidung).

Hierzu werden entweder Kohlenstoffionen mit einer Energie > 500 eV, bevorzugt > 700 eV bis hin zu 2000 eV verwendet und die Temperatur des Substrates in den Bereich vorzugsweise zwischen 100°C und 300°C erhöht. Besonders bevorzugt liegt die Temperatur im Bereich > 150 °C bis < 250°C. Diese Bedingungen vermindern die Ausbildung der sp3 Struktur der Kohlenstoffschicht entsprechend dem Subplantationsmodell von Robertson und sind durch überwiegende Dislokationen in Einschussrichtung der Ionen und nachfolgende Diffusion der interstitiellen Kohlenstoffatome an die Oberfläche der Kohlenstoffschicht und die dortige Anlagerung in der energetisch bevorzugten sp2-Koordination gekennzeichnet. Dieser Mechanismus erzeugt aufgrund der Wachstumsrichtung senkrecht (bzw. annähernd senkrecht) zur Substratoberfläche die angestrebten senkrecht orientierten nebeneinanderstehenden Kohlenstoffschichten (anisotropen nanokristallinen Kohlenstoffschichten).

Die Kohlenstoff-Ionen für die Schichtbildung können bevorzugt mittels einer Arc-Entladung, eines HiPIMS Plasma oder auch eines ionisierten Dampfstroms erzeugt werden. Eine gefilterte Kohlenstoff-Bogenentladung ist für die Erzeugung hoher Kohlenstoff-Ionenströme ohne Inertgasionen vorteilhaft. Ein HiPIMS-Plasma enthält nachteilig immer ein Gemisch aus Inertgasionen und Kohlenstoffionen, dafür jedoch vorteilhaft keine Kohlenstoff-Makropartikel.

Der Effekt der bevorzugten Ausbildung der sp2-Bindungen senkrecht zur Oberfläche kann erfindungsgemäß durch eine verbreiterte Ionenenergieverteilung durch Energiemodulation oder durch Erzeugung mehrerer Ladungszustände der Kohlenstoffionen verstärkt werden.

Bei diesem Wachstumsprozessbildet sich an der Oberfläche eine dynamische, d.h. fortschreitende Schicht, die eine stark gestörte sp2-Struktur aufweist und auch als amorpher oberflächennaher Bereich bezeichnet wird. Dieser amorphe oberflächennahe Bereich weist eine geringere Leitfähigkeit senkrecht zur Oberfläche auf als die sp2-gebundenen, senkrecht zur Oberfläche ausgerichteten Kohlenstoffschichten. Zur Reduzierung des Kontaktwiderstandes wird die Austrittsarbeit der Elektronen an der Oberfläche dadurch reduziert, dass dieser amorphe oberflächennahe Bereich nach Beendigung des Abscheideprozesses der anisotropen sp2-gebundenen Kohlenstoffschicht entfernt wird. Dies ist mit einem niederenergetischen ionenassistierten Prozess möglich, der die sp2 gebundenen Nanokristallite nicht zerstört, jedoch den amorphen oberflächennahen Bereich abträgt. Dies erfolgt bevorzugt mittels Plasmaätzens. Erfindungsgemäß wird dazu ein Argon/Sauerstoffplasma, ein Argon/Wasserstoffplasma oder ein reines Sauerstoff- oder Wasserstoffplasma genutzt. Die Energie der reaktiven Spezies und der Argonionen muss hierbei unterhalb der Dislokationsenergie für Kohlenstoff im sp2-Gitter liegen und wird typischerweise zwischen 20 eV und 200 eV angesetzt. Hierdurch wird präferentiell der amorph gebundene Kohlenstoff entfernt und die sp2-gebundenen Kristallite reichen bis an die Oberfläche der anisotropen nanokristallinen Kohlenstoffschicht. Durch den Einsatz der Ätzionen kann bestimmt werden, ob die Oberflächenatome der graphitischen Kristallite Wasserstoff-terminiert oder Sauerstoff-terminiert sind. Es kann ebenfalls eine Fluor-terminierte Oberfläche durch die Verwendung eines fluorhaltigen Precursors (z.B. CF4) während des plasmachemischen Ätzprozesses erzeugt werden. Auf diese Weise kann die chemische Energie der Oberfläche, die z.B.

für die Anbindung von Klebstoffen oder Polymeren und für den Kontaktwinkel von Wasserbenetzungen wesentlich ist, gezielt eingestellt werden.

Vorteilhaft werden alle PVD-Prozesse in einer und derselben Vakuumkammer ausgeführt. Optional ist es natürlich möglich, die Prozesse nacheinander bspw. in einer Durchlaufanlage auszuführen, wobei nur ein oder einige Teilschritte in einer Kammer ausgeführt werden und die Substrate zwischen den Teilschritten bzw. Gruppen von Teilschritten zwischen den Kammern bewegt werden.

Das Erwärmen des Substrates kann entweder als Begleiterscheinung der PVD-Prozesse erfolgen oder aber, das Substrat wird mittels einer dafür vorgesehenen Heizeinrichtung auf eine Temperatur im Temperaturbereich von 150°C bis 300°C gebracht. Das Erwärmen kann dabei vor dem Einschleusen in die Kammer für den PVD-Prozess erfolgen oder aber in dieser Kammer.

Während des Aufbaus der anisotropen nanokristallinen Kohlenstoffschicht wird vorteilhaft während des PVD-Prozesses eine verbreiterte Ionenenergieverteilung genutzt, die beispielsweise durch Variation der Beschleunigungsspannung erreicht wird. Bevorzugt wird dabei die Beschleunigungsspannung derart variiert, dass sich die Ionenenergie zwischen 500 eV und 2000 eV bewegt.

Optional werden während des PVD-Prozesses zur Ausbildung der anisotropen nanokristallinen Kohlenstoffschicht mehrere unterschiedliche Ladungszustände der Kohlenstoffatome erzeugt. Dies erfolgt beispielsweise durch gepulste Bogenentladungen oder Magnetronentladungen mit hohen Stromanstiegsgeschwindigkeiten von > 10 A/$\mu$s, bevorzugt > 30 A/$\mu$s.

Optional werden im PVD-Prozess zur Ausbildung der anisotropen nanokristallinen Kohlenstoffschicht neben den Kohlenstoffionen auch Intergasionen (Ar, Kr, Xe) eingesetzt.

Bevorzugt handelt es sich bei dem PVD-Prozess zur Ausbildung der anisotropen nanokristallinen Kohlenstoffschicht um eine Arc-Entladung, ein HiPIMS-Plasma oder einen ionisierten Dampfstrom.

Während des Aufwachsens der anisotropen nanokristallinen Kohlenstoffschicht bildet sich an der Wachstumsfront (der Oberfläche der Kohlenstoffschicht) eine amorphe Deckschicht aus Kohlenstoff, der sich noch nicht in die sp2-koordinierte Struktur eingefügt hat. Diese Deckschicht beeinflusst die elektrische Leitfähigkeit (Übergangswiderstand) nachteilig. Daher wird nach dem Abschluss der Erzeugung der Schicht aus überwiegend sp2-koordinierten graphitischen Nanokristalliten die amorphe Deckschicht mit einem niederenergetischen ionenassistierten Prozess entfernt Dieser niederenergetische ionenassistierte Prozess wird bei Energien durchgeführt, bei denen die sp2-gebundenen Nanokristallite nicht zerstört werden. Üblicherweise liegt die eingesetzte Energie unterhalb von 100 eV.

Vorzugsweise ist der niederenergetische ionenassistierte Prozess ein Oberflächenätzen mit einem Argon/Sauerstoffplasma, einem Argon/Wasserstoffplasma oder einem reinen Sauerstoff- oder Wasserstoffplasma. Die Energie der Wasserstoffionen oder der Sauerstoffionen sowie der Argonionen bleibt dabei unterhalb der Dislokationsenergie für Kohlenstoffatome im sp2-Gitter. Vorzugsweise erfolgt im Zuge des Oberflächenätzens auch die Hydrophilisierung der Oberfläche der anisotropen nanokristallinen Kohlenstoffschicht.

Optional kommt bei dem niederenergetischen ionenassistierten Prozess weiterhin ein fluorhaltiger Precursor zum Einsatz. Mittels des fluorhaltigen Precursors kann eine funktionalisierte fluorterminierte Oberfläche der Schicht von überwiegend sp2-koordinierten graphitischen Nanokristalliten erzeugt werden. Durch die fluorterminierte Oberfläche werden spätere Verarbeitungsvorgänge erleichtert.

Optional wird die Schicht von überwiegend sp2-koordinierten graphitischen Nanokristalliten mit dem erfindungsgemäßen Verfahren auf dem gesamten Substrat oder nur ausgewählten Bereichen des Substrates aufgebracht.

Das erfindungsgemäße Verfahren kann vorteilhaft vor oder auch nach einem Umformen des Substrates durchgeführt werden. Dies ermöglicht es, die bereits beschichtete Bipolarplatte ohne Beschädigung der Schicht graphitischer Nanokristallite umzuformen oder aber, ein in die endgültige Verwendungsform umgeformtes Substrat mit dem erfindungsgemäßen Verfahren zu beschichten.

Die erfindungsgemäße beschichtete Bipolarplatte und/oder eine nach dem erfindungsgemäßen Verfahren beschichtete Bipolarplatte wird vorteilhaft als Bipolarplatte in einer Brennstoffzelle verwendet.

Die Erfindung ist nicht auf die dargestellten und beschriebenen Ausführungsformen beschränkt, sondern umfasst auch alle im Sinne der Erfindung gleich wirkenden Ausführungsformen. Ferner ist die Erfindung auch nicht auf die speziell beschriebenen Merkmalskombinationen beschränkt, sondern kann auch durch jede beliebige andere Kombination von bestimmten Merkmalen aller insgesamt offenbarten Einzelmerkmale definiert sein, sofern sich die Einzelmerkmale nicht gegenseitig ausschließen, oder eine spezifische Kombination von Einzelmerkmalen nicht explizit ausgeschlossen ist.

## Figuren

**Tab. 1** zeigt die Messzyklen zur Messung des druckabhängigen Kontakt- und Bulkwiderstandes.

**Tab. 2** zeigt die Messergebnisse für verschiedene Proben von erfindungsgemäß beschichteten Edelstahlfolien.

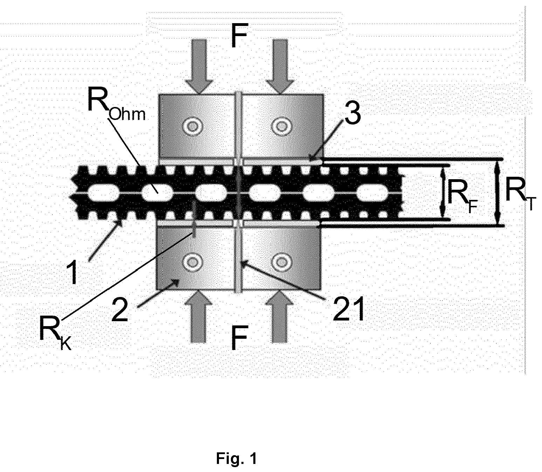

**Fig. 1** zeigt schematisch die Messanordnung zur Untersuchung der Proben 1. Die Backen 2 pressen die Probe 1 und die Gasdiffusionsschicht 3 mit der Kraft F zusammen. Über die Nadeln 21 erfolgt die Kontaktierung von Probe und Gasdiffusionsschicht. Dabei bedeuten:

$R_K$ - Kontaktwiderstand, $R_{ohm}$ - Innenwiderstand, $R_F$ - forward , $R_T$ - Gesamtwiderstand ($R_{total}$)

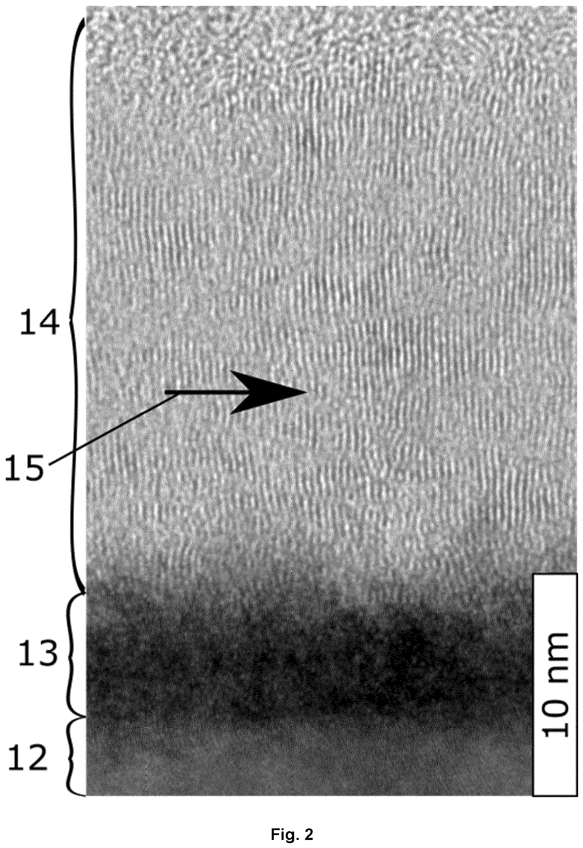

**Fig. 2** zeigt eine Aufnahme, die mit einem Transmissionselektronenmikroskop (TEM) aufgenommene Abbildung eines Schnittes durch eine erfindungsgemäße Bipolarplatte. Das Substrat selbst ist nicht auf der Abbildung enthalten. Der Pfeil 15 zeigt eine c-Richtung der graphitischen Nanokristallite. Die Ausrichtung der c-Richtung der graphitischen Nanokristallite liegt überwiegend in einer Ebene parallel zur Oberfläche des Substrats.

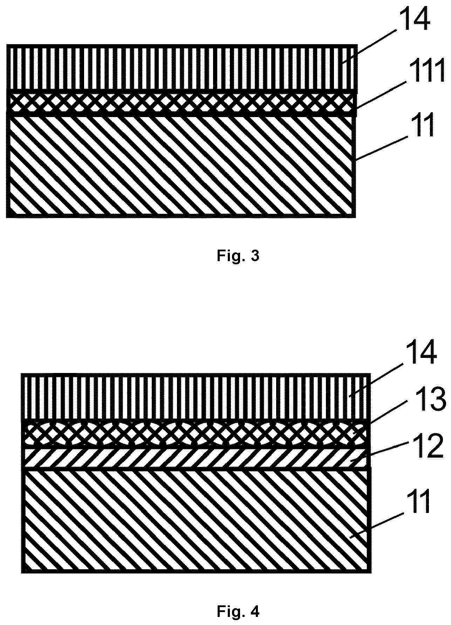

**Fig. 3** zeigt schematisch den Schichtaufbau eines Ausführungsform der erfindungsgemäßen beschichteten Bipolarplatte. Bei dieser Ausführungsform ist auf dem Substrat lediglich eine karbidische Zwischenschicht angeordnet, die eine Mischung aus Material des Substrates und von Kohlenstoffatomen (implantiert/subplantiert) beinhaltet.

**Fig. 4** zeigt schematisch den Schichtaufbau einer Ausführungsform der erfindungsgemäßen beschichteten Bipolarplatte, bei der eine Chromschicht 12 auf dem Substrat 11 angeordnet ist. Durch Implantation/Subplantation von Kohlenstoffionen ist die karbidische Zwischenschicht 13 aus Chrom- und Kohlenstoffatomen erzeugt wurden, auf der die anisotrope nanokristalline Kohlenstoffschicht angeordnet ist.

### Ausführungsbeispiele

Eine Edelstahlfolie (Stahlsorte 1.4404 (316L), 100 $\mu$m dick) wird in einem Elektrolyt plasmapoliert. Durch diesen Prozess wird die Rauheit auf Ra < 0.07 und damit < 1/3 der Anfangsrauheit reduziert. Das Verfahren beruht auf der DE 10 207 632 B4, "Verfahren zum Plasmapolieren von Gegenständen aus Metall und Metalllegierungen".

Die Folie wird in eine Vakuumanlage eingeschleust und mit Ar-Ionen mit einer mittleren Energie von 800 eV wird die oxidische Oberflächenschicht entfernt (gesputtert). Das Ende des Sputterprozesses wird anhand der Abnahme der optischen Emission des Sauerstoffs im Plasma detektiert. Das Ende des Sputterprozesses kann alternativ mit einem Massenspektrometer detektiert werden oder mittels einer ellipsometrischen in-situ Messung oder über eine voreingestellte Sputterzeit und Ionenstromdichte festgelegt werden.

Zeitgleich oder nachfolgend kann die Temperatur der Folie zusätzlich mit einem Heizerauf ca. 200°C erhöht werden, um die Desorption von Adsorbaten zu beschleunigen.

Nachfolgend wird eine Haftschicht (metallische Zwischenschicht) aus Cr oder Ti mit einer gepulsten Magnetron-Sputter-Anordnung (HiPIMS Prozess) aufgetragen. Zu Beginn der Beschichtung wird eine erhöhte Substratvorspannung (BIAS) von-800 V an die Folie angelegt, was zu einem Metall-Ionen-basierten Zerstäubungsprozess und gleichzeitiger Implantation von Metallionen in die Oberfläche der Stahlfolie (Ionenmischen) führt. Die Haftschicht wird mit einer Dicke von 100 nm abgeschieden.

Anschließend wird die Stahlfolie vor die Kohlenstoffionenquelle bewegt und mit einer Kohlenstoff-Ionenenergie von ca. 800 eV bestrahlt. Hierbei entsteht zunächst eine Mischschicht aus den Atomen der Haftschicht (der metallischen Zwischenschicht) und den Kohlenstoffionen. In dieser Mischschicht bilden sich karbidische Bindungen von beispielsweise CrC oder TiC. Mit fortschreitender Bestrahlung mit Kohlenstoffionen nimmt die Verlagerung von Atomen der Haftschicht schnell ab und es wächst eine reine Kohlenstoffschicht. Die Dicke der karbidischen Mischschicht beträgt unter diesen Bedingungen typisch ca. 4 nm. Unter den Bedingungen der hohen kinetischen Energie der Kohlenstoffionen von etwa 800 eV und erhöhter Substrattemperatur von ca. 180 °C bildet sich eine überwiegend sp2 gebundene Kohlenstoffstruktur mit nanokristallinen Bereichen, in denen die c-Achse parallel zur Oberfläche der Folie liegen.

Der Prozess der überwiegend sp2 gebundenen Kohlenstoffschicht wird nach dem Wachstum von etwa 20 nm beendet. In einem Oberflächenbereich von ca. 2 nm Dicke ist das Kohlenstoffnetzwerk (Gitter) nicht perfekt orientiert und stark gestört. Man erkennt im TEM Bild amorphe Kohlenstoffstrukturen und parallel zur Oberfläche verlaufende sp2 Ebenen.

Die etwa 2 nm dicke amorphe und nicht perfekt orientierte sp2 gebundene Oberflächenschicht wird im nachfolgenden Schritt mit einem Gemisch aus Argon- und Sauerstoff-Ionen mit niedriger Energie von etwa 50 eV plasmachemisch weggeätzt. Im Ergebnis reichen die sp2-Ebenen in den nanokristallinen Bereichen bis an die Oberfläche. Wird im Ätzprozess Sauerstoff verwendet, verbleiben die Endbindungen der Kohlenstoffatome an der Oberfläche (engl. dangling bonds) mit Sauerstoff terminiert. Dies führt zu einer hydrophoben Kohlenstoff-Oberfläche. Wird der Plasmachemische Ätzprozess mit Wasserstoff oder Fluor bzw. mit Wasserstoff- oder Fluor-haltigen Precursoren durchgeführt, so erhält man eine mit Wasserstoff bzw. mit Fluor terminierte Oberfläche. Hierüber kann die Oberflächenenergie und damit der Kontaktwinkel gezielt eingestellt werden.

### Messungen an den wie dargestellt beschichteten Proben:

HiPIMS Cr Schicht, darauf mit gefiltertem Kohlenstoff-Arc bei einer Ionenenergie von 800 eV abgeschiedenen Kohlenstoffschicht.

Als Gasdiffusionsschicht kommt ein Gewebe vom Typ Freudenberg H23 zum Einsatz.

Messung des druckabhängigen Kontakt- und Bulkwiderstandes der Proben

- Gemessener Widerstand:

$$R_{total} = 2R_{GDL} + 2R_{contact} + R_{bulk}$$

$R_{bulk}$ ($R_{GDL}$ (Widerstand der Gasdiffusionsschicht) wird vor der Messung bestimmt)

- Berechneter Widerstand:

$$R_{forward} = R_{total} - 2_{RGDL}$$

$$R_{contact} = (R_{forward} - R_{bulk})/2$$

- Gemessene Parameter:

Druck [bar]: 3, 6, 9, 12, 15, 18, 21, 24, 27, 30

Strom [mA]: 500, 1000, 1500, 2000

Messregime siehe Tab. 1.

Es wurden zwei beschichtete Folien in Gruppen von je zwei Proben hinsichtlich des Interface-Kontaktwiderstandes untersucht. Die Messungen wurden vor und nach einem elektrochemischen Alterungstest durchgeführt.
Testprotokoll:

- Elektrolyt: H2SO4 (pH 3.0) + 10 ppm Cl- + 10 ppm F-

- Temperatur: 80°C

- Abtastrate dynamisch: 0.1 mV/s / data measurement static: 120s

- Dynamische Polarisation -400...+600 mV vs. Ag/AgCl (wie beschichtet)

- Statische Polarisation @ +600 mV vs. Ag/AgCl / 24h

- Dynamische Polarisation -400...+600 mV vs. Ag/AgCl (nach der Polarisation)

Messergebnisse

Versuch bei einer Druckkraft F=1,5MPa
Gemessen wurden unter anderem ICR (interner Kontaktwiderstand) sowie Korrosionspotential und Korrosionsstrom an vier Proben. Dabei sind Proben A und B sowie C und D jeweils aus zwei Proben durch Teilung hervorgegangen.
Die Messergebnisse sind Tab. 2 zu entnehmen.

**Tab. 1**

| pressure [bar] | 3 | | | | 6 | | | | 9 | | | | 12 | | | | 15 | | | | 18 | | | | 21 | | | | 24 | | | | 27 | | | | 30 | | | |
|---|---|---|---|---|---|---|---|---|---|---|---|---|---|---|---|---|---|---|---|---|---|---|---|---|---|---|---|---|---|---|---|---|---|---|---|---|---|---|---|---|
| current [A] | 0,5 | 1,0 | 1,5 | 2,0 | 0,5 | 1,0 | 1,5 | 2,0 | 0,5 | 1,0 | 1,5 | 2,0 | 0,5 | 1,0 | 1,5 | 2,0 | 0,5 | 1,0 | 1,5 | 2,0 | 0,5 | 1,0 | 1,5 | 2,0 | 0,5 | 1,0 | 1,5 | 2,0 | 0,5 | 1,0 | 1,5 | 2,0 | 0,5 | 1,0 | 1,5 | 2,0 | 0,5 | 1,0 | 1,5 | 2,0 |
| time [s] | 3,4 | 2,3 | 2,3 | 2,3 | 3,4 | 2,3 | 2,3 | 2,3 | 3,4 | 2,3 | 2,3 | 2,3 | 3,4 | 2,3 | 2,3 | 2,3 | 3,4 | 2,3 | 2,3 | 2,3 | 3,4 | 2,3 | 2,3 | 2,3 | 3,4 | 2,3 | 2,3 | 2,3 | 3,4 | 2,3 | 2,3 | 2,3 | 3,4 | 2,3 | 2,3 | 2,3 | 3,4 | 2,3 | 2,3 | 2,3 |

**Tab. 2**

|  |  | Probe A | Probe B | Probe C | Probe D |
|---|---|---|---|---|---|
| ICR [mOhm*cm$^2$] | vor der elektrochemischen Alterung (Proben wie empfangen) nach der elektrochemischen Alterung | 0,17 1,01 | 0,13 0,64 | 0,13 0,3 | 0,17 0,26 |
| Korrosionspotential [mV] | Probe wie empfangen nach 24 H | 146 138 | 227 225 | 203 165 | 211 204 |
| Korrosionsstrom [$\mu$A/cm$^2$) | Probe wie empfangen nach 24 H | 0,027 0,022 | 0,0047 0,0053 | 0,0047 0,0053 | 0,0059 0,0053 |

**Zitierte Nichtpatentliteratur**

P.N. Belkin, S.A. Kusmanov, E.V. Parfenov, Mechanism and technological opportunity of plasma electrolytic polishing of metals and alloys surfaces, Applied Surface Science Advances 1 (2020) 100016

**Bezugszeichen**

1     beschichtete Bipolarplatte
11    Substrat
111   karbidische Zwischenschicht als Mischung aus Material des Substrates und von Kohlenstoffatomen (implantiert/subplantiert)
12    Chromschicht
13    karbidische Zwischenschicht (Chromkarbidschicht) als Mischung aus Material der Chromschicht und von Kohlenstoffatomen (implantiert/subplantiert)
14    anisotrope nanokristalline Kohlenstoffschicht
15    c-Richtung der graphitischen Nanokristallite der anisotropen nanokristallinen Kohlenstoffschicht
2     Stempel
21    Kontaktnadeln
3     Diffusionsschicht

**Patentansprüche**

1. Beschichtete Bipolarplatte für eine Brennstoffzelle, aufweisend mindestens

   - ein Stahlblech oder eine Stahlfolie als Substrat,
   - eine amorphe karbidische Zwischenschicht,
   - eine auf dem Substrat angeordnete anisotrope nanokristalline Kohlenstoffschicht, wobei sich die karbidische Zwischenschicht zwischen Substrat und anisotroper nanokristalliner Kohlenstoffschicht befindet,

   **dadurch gekennzeichnet, dass**

   - das Substrat eine Restrauigkeit Ra < 100 nm aufweist,
   - die amorphe karbidische Zwischenschicht

     ∘ aus Kohlenstoffatomen und Atomen des Substrates gebildet ist oder aber,
     ∘ dass die amorphe karbidische Zwischenschicht aus Kohlenstoffatomen und den Atomen einer metallischen Zwischenschicht gebildet ist, wobei die metallische Zwischenschicht zwischen Substrat und karbidischer Zwischenschicht angeordnet ist,

   - die Kohlenstoffatome der anisotropen nanokristallinen Kohlenstoffschicht überwiegend sp2-koordiniert in graphitischen Nanokristalliten angeordnet sind,

- die c-Achsen der graphitischen Nanokristallite hochgradig parallel zur Oberfläche des Substrates orientiert sind,
- die graphitischen Nanokristallite von der karbidischen Zwischenschicht bis zur vom Substrat abgewandten Seite der anisotropen nanokristallinen Kohlenstoffschicht reichen,
- die vom Substrat abgewandte Seite der anisotropen nanokristallinen Kohlenstoffschicht hydrophilisiert und/oder funktionalisiert ist.

2. Beschichtete Bipolarplatte nach Anspruch 1, **dadurch gekennzeichnet, dass** das Substrat zu einer Restrauigkeit Ra < 70 nm poliert ist.

3. Beschichtete Bipolarplatte für eine Brennstoffzelle nach einem der vorhergehenden Ansprüche, **dadurch gekennzeichnet, dass** der elektrische Übergangswiderstand zwischen Gasdiffusionsschicht und Kohlenstoffschicht < 0,2 mOhm*cm$^2$ beträgt.

4. Beschichtete Bipolarplatte für eine Brennstoffzelle nach einem der vorhergehenden Ansprüche, **dadurch gekennzeichnet, dass** die amorphe karbidische Zwischenschicht eine Materialdicke < 4 nm aufweist.

5. Beschichtete Bipolarplatte für eine Brennstoffzelle nach einem der vorhergehenden Ansprüche, **dadurch gekennzeichnet, dass** die metallische Zwischenschicht aus Chrom oder Titan besteht und eine Materialdicke bevorzugt im Bereich von 2 nm bis 300 nm aufweist.

6. Beschichtete Bipolarplatte für eine Brennstoffzelle nach einem der vorhergehenden Ansprüche, **dadurch gekennzeichnet, dass** die anisotrope nanokristalline Kohlenstoffschicht mit Bor oder Stickstoff dotiert ist.

7. Beschichtete Bipolarplatte für eine Brennstoffzelle nach einem der vorhergehenden Ansprüche, **dadurch gekennzeichnet, dass** die Hydrophilisierung durch die Anlagerung von Sauerstoff oder Stickstoff an der Oberfläche der Kohlenstoffschicht erfolgt.

8. Beschichtete Bipolarplatte für eine Brennstoffzelle nach einem der Ansprüche 1 bis 5, **dadurch gekennzeichnet, dass** die Funktionalisierung durch die Anlagerung von Fluor an der Oberfläche der Kohlenstoffschicht erfolgt.

9. Verfahren zur Herstellung einer beschichteten Bipolarplatte für Brennstoffzellen, aufweisend mindestens die folgenden Schritte:

   a. Bereitstellen eines Stahlblechs oder einer Stahlfolie als Substrat,
   b. Polieren des Substrats zu einer Restrauigkeit Ra < 100 nm,
   c. Entfernen von Adsorbaten und/oder der natürlichen Oxidschicht von der Oberfläche des Substrates,
   d. Deponieren von Kohlenstoffatomen mit Energien im Bereich von 500 eV bis 1000 eV und bei Temperaturen des Substrates zwischen 100°C und 300°C auf dem Substrat und Ausbilden einer karbidischen Zwischenschicht sowie nachfolgend einer Schicht von überwiegend sp2- koordinierten graphitischen Nanokristalliten zu einer anisotropen nanokristallinen Kohlenstoffschicht bis zu einer Schichtdicke im Bereich von 5 nm bis 100 nm mit einem PVD-Verfahren,
   e. Abtragen einer amorphen Kohlenstoffdeckschicht von der Oberfläche der anisotropen nanokristallinen Kohlenstoffschicht, die sich während des PVD-Prozesses in Schritt c. ausgebildet hat, mit einem niederenergetischen ionenassistierten Prozess, der die sp2-gebundenen Nanokristallite nicht zerstört, sowie gleichzeitiges Hydrophilisieren und/oder Funktionalisieren der Oberfläche der Kohlenstoffschicht.

10. Verfahren nach Anspruch 9, **dadurch gekennzeichnet, dass** das Polieren mit einem mechanischen Verfahren oder mittels Plasmapolierens erfolgt.

11. Verfahren nach Anspruch 9 oder 10, **dadurch gekennzeichnet, dass** das Substrat bis zu einer Restrauigkeit < 70 nm poliert wird.

12. Verfahren nach einem der Ansprüche 9 bis 11, **dadurch gekennzeichnet, dass** das Substrat vor oder während Schritt d, auf die Temperatur zwischen 150°C und 300°C erwärmt wird.

13. Verfahren nach einem der Ansprüche 9 bis 12, **dadurch gekennzeichnet, dass** zu Beginn von Schritt d. mittels eines PVD-Verfahrens eine Abscheidung einer Zwischenschicht aus Cr und/oder Ti in einer Materialstärke von 2 nm bis 300 nm erfolgt.

**14.** Verfahren nach einem der Ansprüche 9 bis 13, **dadurch gekennzeichnet, dass** eine verbreiterte Ionenenergieverteilung während des PVD-Prozesses in Schritt d. genutzt wird, die durch Variation der Beschleunigungsspannung erreicht wird.

**15.** Verfahren nach einem der Ansprüche 9 bis 14, **dadurch gekennzeichnet, dass** während des PVD-Prozesses in Schritt d. mehrere unterschiedliche Ladungszustände der Kohlenstoffatome erzeugt werden.

**16.** Verfahren nach einem der Ansprüche 9 bis 15, **dadurch gekennzeichnet, dass** im PVD-Prozess in Schritt d. neben den Kohlenstoffionen auch Intergasionen (Ar, Kr, Xe) eingesetzt werden.

**17.** Verfahren nach einem der Ansprüche 8 bis 14, **dadurch gekennzeichnet, dass** es sich bei dem PVD-Prozess in Schritt d. um eine Arc-Entladung, ein HiPIMS-Plasma oder einen ionisierten Dampfstrom handelt.

**18.** Verfahren nach einem der Ansprüche 9 bis 17, **dadurch gekennzeichnet, dass** der niederenergetische ionenassistierte Prozess ein Oberflächenätzen mit einem Argon/Sauerstoffplasma, einem Argon/Wasserstoffplasma oder einem reinen Sauerstoff- oder Wasserstoffplasma beinhaltet, wobei die Energie der Wasserstoffionen oder der Sauerstoffionen sowie der Argonionen unterhalb der Dislokationsenergie für Kohlenstoffatome im sp2-Gitter liegt und dass im Zuge des Oberflächenätzens die Hydrophilisierung erfolgt

**19.** Verfahren nach einem der Ansprüche 9 bis 18, **dadurch gekennzeichnet, dass** bei dem niederenergetischen ionenassistierten Prozess weiterhin ein fluorhaltiger Precursor zugesetzt wird, der eine funktionalisierte fluorterminierte Oberfläche der Schicht von überwiegend sp2-koordinierten graphitischen Nanokristalliten bewirkt.

**20.** Verfahren nach einem der Ansprüche 9 bis 19, **dadurch gekennzeichnet, dass** das Verfahren auf dem gesamten Substrat oder nur ausgewählten Bereichen des Substrates durchgeführt wird.

**21.** Verfahren zur Herstellung einer beschichteten Bipolarplatte für Brennstoffzellen, **dadurch gekennzeichnet, dass** das Substrat vor oder nach dem Durchführen des Verfahren nach einem der Ansprüche 9 bis 19 umgeformt wurde bzw. umgeformt wird.

**22.** Verwendung einer beschichteten Bipolarplatte nach einem der Ansprüche 1 bis 8 und/oder eines Verfahrens zur Herstellung einer beschichteten Bipolarplatte nach einem der Ansprüche 9 bis 21 in einer Brennstoffzelle.

Fig. 1

**Fig. 2**

14
111
11

Fig. 3

14
13
12
11

Fig. 4

Europäisches
Patentamt

European
Patent Office

Office européen
des brevets

**EUROPÄISCHER RECHERCHENBERICHT**

Nummer der Anmeldung

**EP 21 21 1613**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | ZHANG DI ET AL: "Electronic Transport and Corrosion Mechanisms of Graphite-Like Nanocrystalline Carbon Films Used on Metallic Bipolar Plates in Proton-Exchange Membrane Fuel Cells", APPLIED MATERIALS & INTERFACES, Bd. 13, Nr. 3, 27. Januar 2021 (2021-01-27), Seiten 3825-3835, XP055917651, US ISSN: 1944-8244, DOI: 10.1021/acsami.0c17764 * das ganze Dokument * | 1-22 | INV. H01M8/021 H01M8/0213 H01M8/0228 |
| A | BI FEIFEI ET AL: "Characteristics of amorphous carbon films to resist high potential impact in PEMFCs bipolar plates for automotive application", INTERNATIONAL JOURNAL OF HYDROGEN ENERGY, Bd. 42, Nr. 20, 1. Mai 2017 (2017-05-01), Seiten 14279-14289, XP055900102, AMSTERDAM, NL ISSN: 0360-3199, DOI: 10.1016/j.ijhydene.2017.04.113 Gefunden im Internet: URL:https://www.sciencedirect.com/science/article/pii/S0360319917315203/pdfft?md5=448e93ebf2391ed731dea219de042879&pid=1-s2.0-S0360319917315203-main.pdf> * das ganze Dokument * | 1-22 | |
| A | US 2021/032740 A1 (YI PEIYUN [CN] ET AL) 4. Februar 2021 (2021-02-04) * das ganze Dokument * | 1-22 | RECHERCHIERTE SACHGEBIETE (IPC) H01M |
| A | US 2019/058201 A1 (KIM BOKYUNG [KR] ET AL) 21. Februar 2019 (2019-02-21) * das ganze Dokument * | 1-22 | |

Der vorliegende Recherchenbericht wurde für alle Patentansprüche erstellt

| Recherchenort | Abschlußdatum der Recherche | Prüfer |
|---|---|---|
| München | 3. Mai 2022 | Joffreau, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**EP 4 191 715 A1**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-05-2022

| Im Recherchenbericht angeführtes Patentdokument | Datum der Veröffentlichung | Mitglied(er) der Patentfamilie | Datum der Veröffentlichung |
|---|---|---|---|
| US 2021032740 A1 | 04-02-2021 | CN 108390075 A | 10-08-2018 |
| | | US 2021032740 A1 | 04-02-2021 |
| | | WO 2019144853 A1 | 01-08-2019 |
| US 2019058201 A1 | 21-02-2019 | CN 109411780 A | 01-03-2019 |
| | | DE 102017221558 A1 | 21-02-2019 |
| | | KR 20190018821 A | 26-02-2019 |
| | | US 2019058201 A1 | 21-02-2019 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2811049 B1
- CN 102959779 A
- US 8993197 B2

- EP 3583645 B1
- DE 112010004990 B4
- DE 10207632 B4

**In der Beschreibung aufgeführte Nicht-Patentliteratur**

- **BELKIN.** *Mechanism and technological opportunity of plasma electrolytic polishing of metals and alloys surfaces*

- **P.N. BELKIN ; S.A. KUSMANOV ; E.V. PARFEN-OV.** Mechanism and technological opportunity of plasma electrolytic polishing of metals and alloys surfaces. *Applied Surface Science Advances,* 2020, vol. 1, 100016